# FASCICULE DE BREVET EUROPEEN

(11) **EP 1 986 883 B1**
(45) Date de publication et mention de la délivrance du brevet: **21.07.2010**
(21) Numéro de dépôt: 07731003.5
(22) Date de dépôt: 19.02.2007
(51) Int. Cl.: B60P 1/64, B60P 1/36, B60P 1/43, B62D 63/06

(54) **DISPOSITIF DE MANUTENTION**
HANDHABUNGSVORRICHTUNG
HANDLING DEVICE

(30) Priorité: 20.02.2006 FR 0650593
(43) Date de publication de la demande: 05.11.2008
(73) Titulaire: SARL INNOVEP, 12000 Rodez (FR)
(72) Inventeur: CAMALY, Dominique, 12800 Quins (FR)
(74) Mandataire: Richebourg, Michel François
(86) Numéro de dépôt international: PCT/FR2007/000292
(87) Numéro de publication internationale: WO 2007/096509

(56) Documents cités:
- EP-A1- 0 518 750
- GB-A- 445 239

## Description

### DOMAINE D'APPLICATION DE L'INVENTION

La présente invention a trait au domaine de la manutention de charges utiles supportées par des plateaux roulants et notamment aux adaptations permettant l'association de ces chariots ou plateaux roulants à des moyens de convoyage. Elle fait référence à un dispositif de manutention tel que défini dans le préambule de la revendication 1.

### DESCRIPTION DE L'ART ANTÉRIEUR

Il existe dans l'art antérieur une pluralité de dispositifs de manutention assurant le convoyage de charges utiles associées à des plateaux roulants. Un tel dispositif est connu par example de EP 0518750 A.

Il existe notamment dans l'art antérieur des dispositifs qui proposent une remorque pour train de convoyage de type de celle comportant au moins une structure portante destinée à transporter au moins une charge, des moyens de roulements associés à cette structure portante et des moyens d'attelage agencés pour atteler ladite remorque à au moins une autre remorque ou à un véhicule dudit train de convoyage. Cette remorque comprend en outre un plateau destiné à recevoir ladite charge et couplé de manière amovible audit châssis, ledit plateau comportant des moyens de roulement auxiliaires de manière à pouvoir être déplacé par rapport audit châssis, ledit châssis et ledit plateau comportant des moyens de guidage du déplacement du plateau par rapport au châssis.

Les charges n'ayant pas obligatoirement la même destination, le principe de ce type de dispositif est d'autoriser le déplacement indépendant du plateau par rapport à la remorque à des fins de chargement ou de déchargement sans dételer les remorques du train de convoyage.

La demanderesse a constaté plusieurs inconvénients à ce type de dispositifs et parmi ceux-ci :
- les remorques ont quatre roues, ce qui ne permet pas de réaliser une trajectoire monotrace pour le train de convoyage compliquant ainsi la manoeuvrabilité d'un tel convoi,
- les plateaux roulants chargés sont difficiles à insérer et à retirer dans le châssis constitué par la remorque, ce manque de mobilité des plateaux étant notamment du à l'importance de la charge supportée,
- les roues des plateaux, même une fois insérés dans le châssis participent au mouvement de convoyage, rendant la trajectoire plus difficile encore à gérer,
- les roues des plateaux convoyés ne sont pas orientées dans le sens autorisant le déplacement du plateau par rapport au châssis à des fins de libération dudit plateau,
- les plateaux roulants sont insérés avec jeu dans ledit châssis ce qui a pour conséquence l'apparition de chocs et d'à-coups,
- des moyens de guidage sont nécessaires pour les mouvements d'insertion ou de retrait du plateau par rapport à la remorque, moyens de guidage nuisant aux possibilités de mobilité,
- pour conserver une rigidité, le châssis accueillant le plateau ne s'ouvre que sur un côté ce qui n'autorise l'accès qu'à partir d'un seul côté que ce soit pour le chargement ou le déchargement,
-etc...

### DESCRIPTION DE L'INVENTION

Partant de cet état de fait, la demanderesse a mené des recherches visant à apporter une meilleure solution à la manutention des charges associées à des plateaux roulants.

Ces recherches ont abouti à la conception d'un dispositif de manutention basé sur une association d'une remorque à un plateau roulant particulièrement optimisée résolvant notamment les problèmes de trajectoire du train de convoyage formé par les remorques ainsi que ceux liés à la liaison du plateau porte-charge avec la remorque.

Selon une caractéristique principale de l'invention, le dispositif de manutention associant au moins une remorque susceptible d'être attelée à un véhicule tracteur et/ou à d'autres remorques pour former un train de convoyage et au moins un plateau porte charge, est remarquable en ce que la remorque comporte des moyens de roulement supportant un châssis équipé d'un module de chargement et de déchargement du plateau porte-charge réunissant des moyens de mise en mouvement motorisée du plateau et des moyens de positionnement dudit plateau sur le châssis de sorte que le plateau ne soit plus en contact avec le sol et soit maintenu en position sur la remorque.

Selon une autre caractéristique principale de l'invention, le module de chargement et de déchargement adopte une structure symétrique en regard du plan de symétrie longitudinal de la remorque et présente sur les deux cotés de la remorque une rampe d'accès pour le plateau à des fins de chargement et de déchargement. Cette structure symétrique peut par exemple être en oeuvre par une paire de chaînes à maillons constituant ledit lien flexible et dont la trajectoire ou le chemin de déplacement forme un trapèze centré sur ledit plan de symétrie longitudinal et dont les côtés non parallèles forment lesdites rampes.

La remorque de l'invention peut donc accueillir un plateau roulant par ses deux côtés. De plus, le côté de prise en charge du plateau par la remorque ne préjuge pas du côté de dépose et laisse une totale liberté pour le convoyeur.

Cette caractéristique est particulièrement avantageuse en ce qu'elle propose d'éviter tout contact entre le sol et le plateau pendant la phase de convoyage. Aussi, seuls les moyens de roulement de la remorque participent au support de la charge et à la trajectoire de cette dernière pendant la phase de convoyage. Aussi, les moyens de roulement du plateau ne sont pas dimensionnés pour le convoyage ce qui en diminue le coût.

Un autre avantage est que les phases de chargement et de déchargement sont motorisées. Les charges étant particulièrement lourdes, la réunion et la libération des plateaux porte-charge avec la remorque ne sont plus dépendants de la force physique du manutentionnaire. En outre, l'utilisation d'un moyen motorisé garantit une qualité de positionnement participant à la bonne répartition de la charge par rapport à la remorque et en conséquence au bon convoyage. La motorisation de cette phase la rend également plus rapide.

Selon une autre caractéristique particulièrement avantageuse de l'invention, ledit moyen de mise en mouvement motorisée du module de chargement et de déchargement dudit plateau est constitué par au moins un lien flexible avec lequel vient en contact le plateau et dont la mise en mouvement dans un sens ou dans un autre assure la montée ou la descente du plateau par rapport au châssis.

La mise en mouvement motorisée est donc réalisée par simple contact. Lorsque le lien flexible est en contact avec le plateau, le mouvement linéaire dudit lien peut être transmis au dit plateau. Le choix technologique d'une mise en mouvement par contact simplifie les sous-ensembles y participant.

Selon une autre caractéristique particulièrement avantageuse de l'invention, ledit châssis est équipé sur sa partie inférieure de deux roues à arbres coaxiaux constituant les moyens de roulement de la remorque et disposées sur les côtés du châssis au centre de la remorque. Ainsi, la trajectoire du train de convoyage est plus facile à contrôler au moyen du tracteur car la trajectoire des remorques n'est pas limitée et guidée par un moyen de roulement. L'orientation de ces moyens de roulement dépend directement de la trajectoire suivie par le tracteur.

Selon une autre caractéristique particulièrement avantageuse de l'invention, ledit châssis comporte des capteurs qui, au contact du plateau, assurent la mise en mouvement du lien flexible. Ainsi, non seulement les opérations de chargement et de déchargement sont motorisées mais l'opération de chargement est automatique dès que le plateau est repéré dans une certaine position par rapport au module de chargement. Ainsi, selon l'invention le capteur ne peut être activé que lorsque le plateau se trouve dans une position où le lien flexible peut transmettre par contact, son mouvement audit plateau à des fins de chargement de ce dernier sur la remorque.

Plus précisément, la demanderesse a imaginé que le module de déchargement et de déchargement est mis en oeuvre par le déplacement d'au moins une chaîne sur laquelle le plateau vient en contact et qui, dans son mouvement linéaire, entraîne le plateau vers le centre de la remorque.

Pour faciliter ce contact et cette transmission de mouvement à des fins de chargement ou de déchargement, la partie inférieure dudit plateau est équipée de patins assurant le contact entre le plateau et ledit lien flexible. Ces patins sont en contact avec le lien flexible lorsque le plateau actionne le capteur.

Selon une caractéristique particulièrement avantageuse, ledit lien flexible adopte une trajectoire ascendante du bord de la remorque vers son centre afin de transmettre au plateau aussi bien un mouvement de translation horizontale que verticale.

Afin de faciliter l'orientation du plateau lors des phases de chargement et de déchargement, ledit plateau est équipé de quatre roues dont deux fixes et deux directionnelles, la paire de roues fixes étant orientée de façon à autoriser le mouvement du plateau selon la direction appropriée à son approche latérale de la remorque. Ainsi, même pour le déchargement, au moins une paire de roues est orientée dans le sens de déplacement.

Afin de palier tout mauvais entraînement d'une chaîne par rapport à l'autre, lors des phases de chargement et de déchargement, la demanderesse a avantageusement imaginé qu'au moins deux patins d'un même côté (avant ou arrière) venant en contact avec les chaînes soient montés aux extrémités d'un palonnier c'est à dire aux extrémités d'un bras pivotant en son centre et susceptible de plus ou moins soulever ou rabaisser un patin par rapport à l'autre selon qu'il soit en contact ou non avec la chaîne qui le met en mouvement.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BREVE DESCRIPTION DES DESSINS

La figure 1 est un dessin schématique d'une vue de face d'un mode de réalisation d'une remorque conforme à l'invention,
La figure 2 est un dessin schématique d'une vue de dessus de la remorque de la figure 1,
La figure 3 est un dessin schématique d'une vue de côté de la remorque de la figure 1,
La figure 4 est un dessin schématique d'une vue de face d'un mode de réalisation d'un plateau conforme à l'invention,
La figure 5 est un dessin schématique d'une vue de dessus du plateau de la figure 4,
La figure 6 est un dessin schématique d'une vue de côté du plateau de la figure 4,
La figure 7 est un dessin schématique d'une vue de côté en coupe selon le plan de coupe référencé A-A de l'engagement du plateau roulant sur la remorque,
La figure 8 est un dessin schématique d'une vue de dessus de la position illustrée en figure 7 et sur laquelle est situé le plan de coupe A-A,
La figure 9 est un dessin schématique d'une vue de côté en coupe selon le même plan de coupe référencé A-A du plateau monté sur la remorque,
La figure 10 est un dessin schématique d'une vue de dessus de la position illustrée en figure 9.

### DESCRIPTION DES MODES DE RÉALISATION PRÉFÉRÉS

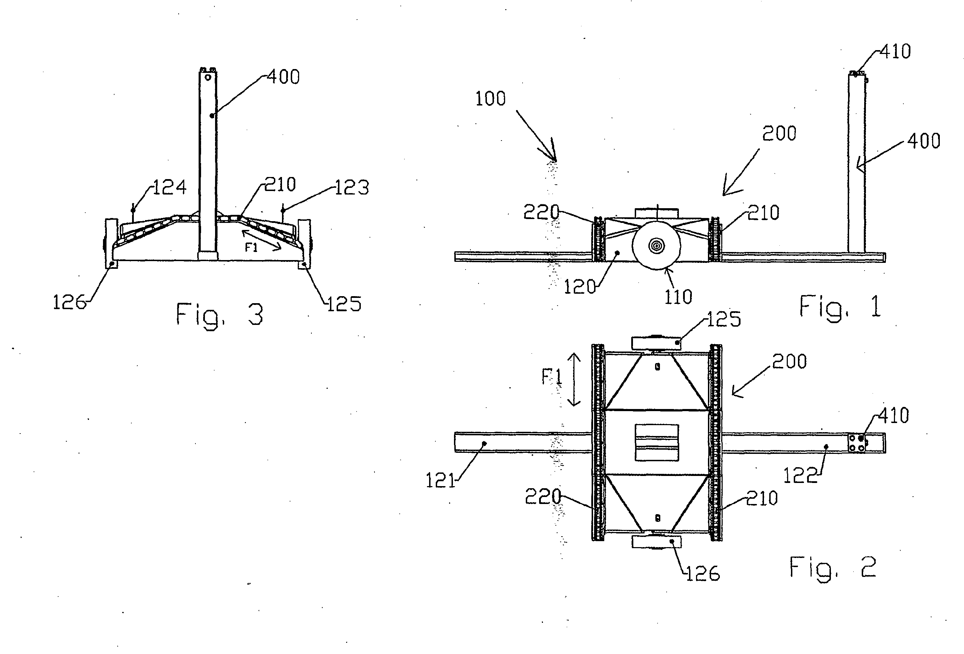

Telle qu'illustrée sur les dessins des figures 1, 2 et 3, la remorque référencée 100 est susceptible d'être attelée à un véhicule tracteur et/ou à d'autres remorques pour former un train de convoyage, tracteur et autres remorques qui ne sont pas illustrés pour plus de clarté.

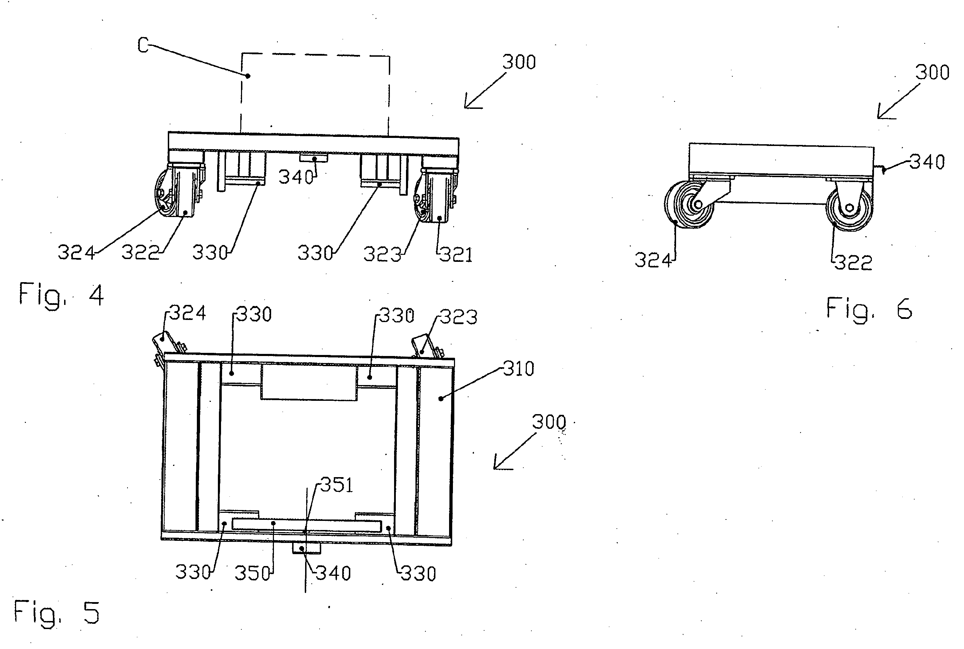

Conformément à l'invention, cette remorque 100 comporte des moyens de roulement 110 portant un châssis 120 réunissant un module de chargement et de déchargement motorisé 200 du plateau 300 lequel apparaît dans les figures 4 à 10, ce module de chargement assurant également le positionnement dudit plateau 300 sur le châssis 120 à des fins de transport du plateau 300 sur ledit châssis 120.

Ce châssis 120 est équipé sur sa partie avant et sa partie arrière de barres d'attelage 121 et 122 qui sont disposées dans l'axe longitudinal c'est à dire dans l'axe d'avancée de la remorque 100 afin d'assurer les fonctions d'attelage et d'équilibrage de la remorque par rapport au roues.

Comme illustrée, une des barres d'attelage 122 comporte un mât de commande 400 équipé de boutons poussoirs 410 et les plaçant à une hauteur pratique pour commander le module de chargement et de déchargement 200. Ainsi, selon une caractéristique particulièrement avantageuse, chaque remorque 100 comporte un module de commande 400 du module de chargement et de déchargement 200.

Le châssis 120 supporte des moyens de détection tels les capteurs de contact 123, 124 sur lesquels vient buter le plateau 300 afin d'activer le module de chargement 120.

Ce châssis 120 est en outre équipé sur sa partie inférieure de deux roues 125 et 126 à arbres coaxiaux constituant les moyens de roulement de la remorque 100 et disposées sur les côtés du châssis 120 au centre de la remorque 100.

Selon le mode de réalisation illustré et conformément à une caractéristique de l'invention, ledit module de chargement et de déchargement 200 qui assure la mise en mouvement dudit plateau 300 est constitué par au moins un lien flexible avec lequel vient en contact le plateau et dont la mise en mouvement, dans un sens ou dans un autre, assure la montée ou la descente dudit plateau 300 sur ledit module et donc sur la remorque.

Plus précisément, le module de chargement et de déchargement 200 du plateau 300 met en mouvement deux chaînes 210 et 220 qui adoptent, séparées l'une de l'autre mais mises en mouvement de manière synchronisée, le même chemin de déplacement. Comme illustré, ce chemin de déplacement adopte la forme d'un trapèze et suit une déclivité sur les deux côtés de la remorque 100. Ces plans inclinés permettant de faire suivre un mouvement et une trajectoire de montée ou de descente au plateau 300 (selon le sens de mise en mouvement illustré par la double flèche F1).

Bien entendu, le châssis 120 est équipé d'un moteur et d'un moyen de transmission de mouvement (non illustrés car recouverts par un capotage) assurant la mise en mouvement synchronisée desdites chaînes.

Le dispositif de l'invention associe la remorque ci-dessus décrite à un plateau 300 illustré par les figures 4, 5, 6, 7 et 8. Ce plateau roulant porte-charge 300 a été conçu pour collaborer avec le module de chargement et de déchargement 200 de la remorque 100.

Ce plateau 300 est constitué d'un cadre 310 dont la partie supérieure accueille la charge à transporter symbolisée en traits interrompus courts et référencée C.

La partie inférieure du cadré 310 est équipée des moyens de roulement dudit plateau 300 constitués ici par deux paires de roulettes 321, 322 et 323, 324. Comme illustrée, la première paire 321, 322 est fixe alors que la deuxième est directionnelle.

La partie inférieure du cadre 310 du plateau 300 est également équipée de patins 330 assurant le contact et la transmission de mouvement entre le plateau 300 et lesdites chaînes 210 et 220. Selon le mode de réalisation illustré, le plateau 300 est équipé de quatre patins de contact 330 constituant deux paires, une paire avant et une paire arrière, l'écartement entre patin pour une paire correspondant à l'écartement entre les deux chaînes sur lesquelles ils viennent en contact.

Le cadre 310 est en outre équipé d'une zone de contact 340 du plateau avec les capteurs 123 et/ou 124 dont l'activation déclenche la mise en mouvement du module de chargement 200. Cette zone de contact 340 est centrée par rapport au plateau 300 et est déportée par rapport au rebord de façon à venir en contact plus tôt avec le capteur 124.

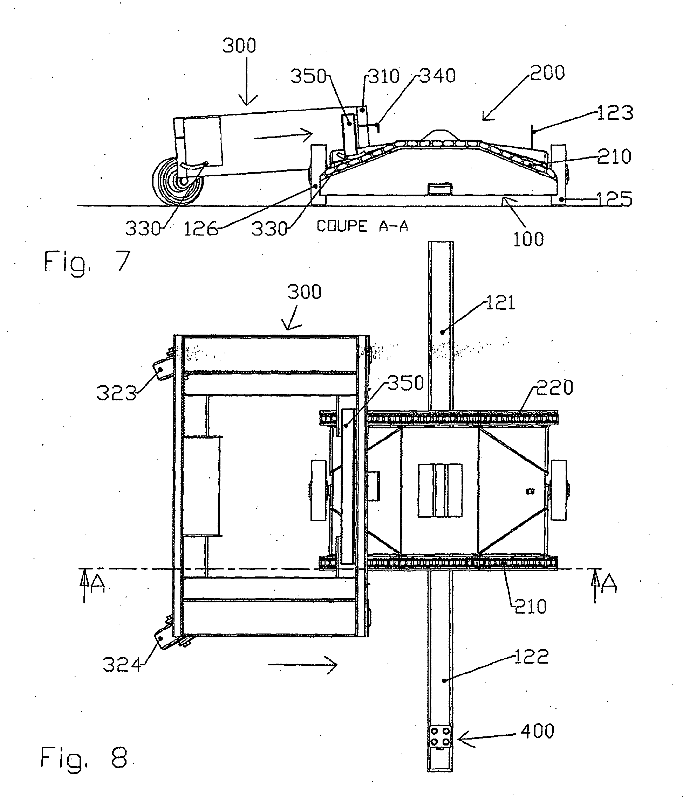

Les principales étapes de fonctionnement du dispositif de l'invention sont illustrées par les figures 7, 8, 9 et 10.

Le manutentionnaire met le plateau roulant 300 en approche latérale de la remorque 100 et oriente ledit plateau 300 de sorte que le côté du cadre 310 équipé de la zone de contact 340 se retrouve face à une des rampes latérales formées par les paires de chaînes 210 et 220 du module de chargement et de déchargement 200. Une poussée du plateau 300 va assurer l'appui de ladite zone de contact 340 sur le capteur 124 qui s'efface et qui commande la mise en mouvement dans le sens du chargement du moteur d'entraînement des chaînes 210 et 220.

Selon une caractéristique particulièrement avantageuse, le positionnement des différents sous-ensembles participant à cette phase d'approche est conçu de telle sorte que :
- si la zone de contact 340 vient en contact avec le capteur 124 et 123 les patins sont alignés sur les chaînes et la mise en mouvement démarre,
- si la zone de contact ne vient pas s'appuyer sur le capteur, le plateau vient buter sur le rebord de la remorque 100 sans déclenchement de la mise en mouvement par chaîne car le plateau 300 est alors mal orienté.

De plus, le positionnement des différents sous-ensembles est conçu de telle façon que lorsque la zone de contact 340 vient suffisamment appuyer sur le capteur 124, les patins 330 situés à l'avant du plateau 300 sont déjà en contact avec le plan incliné formé par les chaînes 210 et 220 de sorte que le mouvement linéaire de La chaîne peut être transmis aux patins et en conséquence au plateau 300.

Une fois le plateau engagé sur le plan incliné, seules les roues arrières 324 et 323 restent en contact avec le sol. Le mouvement des chaînes étant linéaire et synchronisé, le plateau est mis en mouvement et guidé par le module de chargement 200.

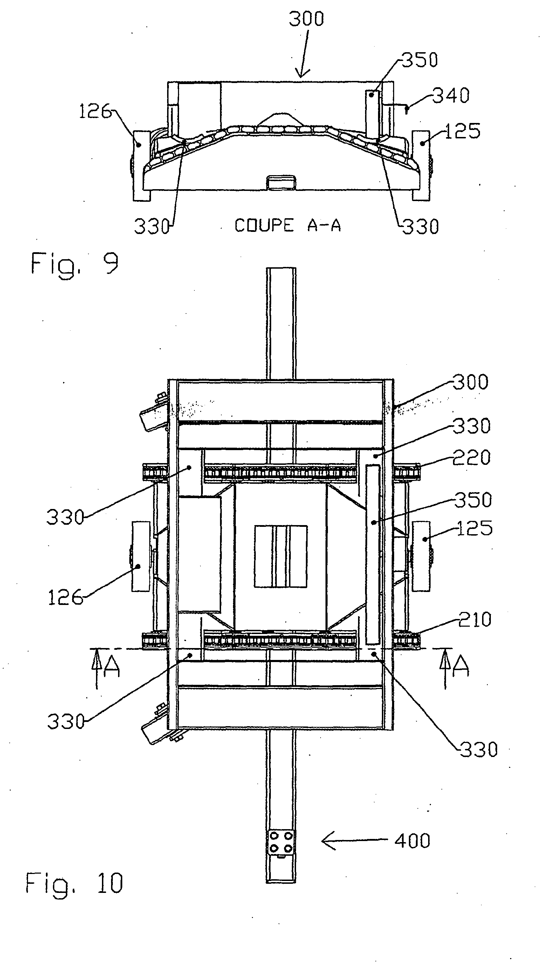

Dans la phase de chargement, le mouvement des chaînes continue jusqu'à la position illustrée par les figures 9 et 10.

Suite à l'engagement des premiers patins 330 et leur déplacement vers le haut et vers l'autre côté de la remorque 100, les patins situés à l'arrière du plateau viennent également en contact avec lesdites chaînes 210 et 220 facilitant la mise en mouvement du plateau 300.

La disposition en trapèze des deux chaînes, trapèze centré par rapport à l'axe de symétrie longitudinale, permet de maintenir en position le plateau sur le module de chargement en formant un contact en "V" avec les patins 330 du plateau 300. Une fois en position sur la remorque, les roues du plateau ne viennent plus en contact avec le sol.

Du fait de la structure symétrique, le chargement ou le déchargement peuvent être réalisés à partir des deux côtés de la remorque doublant ainsi les possibilités du convoi.

Pour mieux coopérer avec les côtés non parallèles du trapèze formé par les chaînes 210 et 220, lesdits patins adoptent une surface de contact cylindrique convexe avec les chaînes.

De plus, les patins 330 situés à l'avant du plateau 300 c'est à dire ceux situés du côté des roues 321 et 322 à direction fixe sont montés aux deux extrémités d'un bras 350 monté pivotant au niveau de son centre sur un axe 351 fixé au cadre 310 et prévu à cet effet. Ce bras 350 sert de palonnier et permet d'équilibrer l'entraînement des deux côtés dû plateau par les chaînes. Cette caractéristique permet en effet d'éviter tout mauvais entraînement notamment lors de la phase de déchargement où le premier contact du plateau avec le sol est réalisé avec les roues directionnelles ce qui peut provoquer un décalage de contact et une trajectoire dont la direction ne serait pas parallèle à la direction suivie par les chaînes. Ce décalage est rattrapé par ledit palonnier 350 en évitant le contact avec un patin arrivé trop bas et en privilégiant le contact avec un patin resté trop haut.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

Ainsi par exemple, la demanderesse a imaginé le tracteur comme un véhicule électrique et transmet cette énergie aux différentes remorques dont il assure la traction. Ainsi, le module de commande 400 et le module de chargement et de déchargement y associé utilisent dans ce cas cette énergie.

## Revendications

1. Dispositif de manutention associant au moins une remorque (100) susceptible d'être attelée à un véhicule tracteur et/ou à d'autres remorques pour former un train de convoyage et au moins un plateau (300) porte charge (C), la remorque (100) comportant des moyens de roulement (110) supportant un châssis (120) équipé d'un module de chargement et de déchargement (200) du plateau (300) porte-charge (C) réunissant des moyens de mise en mouvement motorisée du plateau et des moyens de positionnement dudit plateau (300) de sorte que le plateau (300) ne soit plus en contact avec le sol et soit maintenu en position sur la remorque (100), le dispositif étant **CARACTÉRISÉ PAR LE FAIT QUE** le module de chargement et de déchargement (200) adopte une structure symétrique en regard du plan de symétrie longitudinal de la remorque (100) et présente sur les deux cotés de la remorque (100) une rampe d'accès transversale pour le plateau (300) à des fins de chargement et de déchargement.

2. Dispositif selon la revendication 1, **CARACTÉRISÉ PAR LE FAIT QUE** ledit moyen de mise en mouvement dudit plateau (300) est constitué par au moins un lien flexible (210 et 220) avec lequel vient en contact le plateau (300) et dont la mise en mouvement dans un sens ou dans un autre assure la montée ou la descente du plateau (300) par rapport au châssis (120).

3. Dispositif selon la revendication 1, **CARACTÉRISÉ PAR LE FAIT QUE** ledit châssis (120) comporte sur sa partie inférieure deux roues (125 et 126) à arbres coaxiaux constituant les moyens de roulement (110) de la remorque (100).

4. Dispositif selon les revendications 1 et 2, **CARACTÉRISÉ PAR LE FAIT QUE** ledit châssis (120) comporte des capteurs (123 et 124) qui, au contact du plateau (300), assurent la mise en mouvement du lien flexible (210 et 220).

5. Dispositif selon les revendications 1 et 2, **CARACTÉRISÉ PAR LE FAIT QUE** ledit lien flexible (210 et 220) est une chaîne avec les maillons de laquelle le plateau (300) vient en contact.

6. Dispositif selon les revendications 1 et 2, **CARACTÉRISÉ PAR LE FAIT QUE** la partie inférieure dudit plateau (300) est équipée de patins (330) assurant le contact entre le plateau (300) et ledit lien flexible (210 et 220).

7. Dispositif selon les revendications 1 et 2, **CARACTÉRISÉ PAR LE FAIT QUE** le châssis (120) est équipé d'un moteur et d'un moyen de transmission de mouvement assurant la mise en mouvement synchronisée de deux liens flexibles (210 et 220).

8. Dispositif selon les revendications 1 et 2, **CARACTÉRISÉ PAR LE FAIT QUE** ledit lien flexible (210 et 220) adopte une trajectoire ascendante du bord de la remorque (100) vers son centre afin de transmettre au plateau (300) aussi bien un mouvement de translation horizontale que verticale.

9. Dispositif selon la revendication 1, **CARACTÉRISÉ PAR LE FAIT QUE** ladite structure symétrique est mise en oeuvre par une paire de chaînes à maillons (210 et 220) et dont la trajectoire ou le chemin de déplacement forme un trapèze centrée sur ledit plan de symétrie longitudinal et dont les côtés non parallèles formant lesdites rampes.

10. Dispositif selon la revendication 1, **CARACTÉRISÉ PAR LE FAIT QUE** ledit plateau (300) est équipé de quatre roues dont deux fixes (321 et 322) et deux directionnelles (323 et 324).

## Claims

1. Handling device combining at least one trailer (100) capable of being hitched to a towing vehicle and/or to other trailers in order to form a conveyor train and at least one load-bearing (C) dolly (300), the trailer (100) comprising rolling means (110) supporting a chassis (120) equipped with a loading and unloading module (200) for the load-bearing (C) dolly (300), which combines motorized means for moving the dolly and means for positioning said dolly (300), whereby the dolly (300) is no longer in contact with the ground and is held in position on the trailer (100), the device being **characterised in that** the loading and unloading module (200) assumes a symmetrical structure in relation to the longitudinal plane of symmetry of the trailer (100) and presents a transverse access ramp for the dolly (300) on both sides of the trailer (100), for loading and unloading purposes.

2. Device as claimed in claim 1, **characterised in that** said means of moving said dolly (300) consists of at least one flexible linkage (210 and 220) with which the dolly (300) comes into contact and of which the movement in one direction or another ensures the raising or lowering of the dolly (300) relative to the chassis (120).

3. Device as claimed in claim 1, **characterised in that**, on its lower portion, said chassis (120) comprises two wheels (125 and 126) having coaxial axle shafts comprising the rolling means (110) for the trailer (100).

4. Device as claimed in claims 1 and 2, **characterised in that** said chassis (120) comprises sensors (123 and 124) which, when in contact with the dolly (300), ensure movement of the flexible linkage (210 and 220).

5. Device as claimed in claims 1 and 2, **characterised in that** said flexible linkage (210 and 220) is a chain the links of which come into contact with the dolly (300).

6. Device as claimed in claims 1 and 2, **characterised in that** the lower portion of said dolly (300) is equipped with pads (330) ensuring contact between the dolly (300) and said flexible linkage (210 and 220).

7. Device as claimed in claims 1 and 2, **characterised in that** the chassis (120) is equipped with a motor and a means of transmitting movement, which ensures the synchronized movement of two flexible linkages (210 and 220).

8. Device as claimed in claims 1 and 2, **characterised in that** said flexible linkage (210 and 220) assumes an upward path from the edge of the trailer (100) to the centre thereof, so as to transmit both a horizontal translational as well as vertical movement to the dolly (300).

9. Device as claimed in claim 1, **characterised in that** said symmetrical structure is implemented by a pair of link chains (210 and 220) the path or path of movement of which forms a trapezium centred on said longitudinal plane of symmetry, and the non-parallel sides of which form said ramps.

10. Device as claimed in claim 1, **characterised in that** said dolly (300) is equipped with four wheels of which two are fixed (321 and 322) and two are directional (323 and 324).

## Patentansprüche

1. Beförderungsvorrichtung, die mindestens einen Anhänger (100), der an ein Zugfahrzeug und/oder an andere Anhänger anhängbar ist, um einen Transportzug zu bilden, und mindestens eine Auflage (300) zum Tragen von Lasten (C) miteinander verbindet, wobei der Anhänger (100) Laufmittel (110) umfasst, die ein Fahrgestell (120) tragen, das mit einem Modul (200) zum Be- und Entladen der Auflage (300) zum Tragen von Lasten (C) versehen ist, das Mittel zur motorisierten Ingangsetzung der Auflage und Mittel zum Positionieren der Auflage (300) vereinigt, so dass die Auflage (300) nicht mehr mit dem Boden in Berührung steht und auf dem Anhänger (100) an Ort und Stelle gehalten wird, wobei die Vorrichtung **dadurch gekennzeichnet ist, dass** das Be- und Entlademodul (200) eine gegenüber der Längssymmetrieebene des Anhängers (100) symmetrische Struktur annimmt und auf den beiden Seiten des Anhängers (100) eine quergerichtete Zugangsrampe für die Auflage (300) für Be- und Entladezwecke aufweist.

2. Vorrichtung nach Anspruch 1, **dadurch gekennzeichnet, dass** das Mittel zur Ingangsetzung der Auflage (300) aus mindestens einem flexiblen Verbindungsteil (210 und 220) besteht, mit dem die Auflage (300) in Berührung kommt und dessen Ingangsetzung in die eine oder andere Richtung das Ansteigen oder Absteigen der Auflage (300) im Verhältnis zum Fahrgestell (120) sicherstellt.

3. Vorrichtung nach Anspruch 1, **dadurch gekennzeichnet, dass** das Fahrgestell (120) auf seinem unteren Teil zwei Räder (125 und 126) mit koaxialen Wellen umfasst, welche die Laufmittel (110) des Anhängers (100) bilden.

4. Vorrichtung nach Anspruch 1 und 2, **dadurch gekennzeichnet, dass** das Fahrgestell (120) Sensoren (123 und 124) umfasst, die bei Berührung mit der Auflage (300) die Ingangsetzung des flexiblen Verbindungsteils (210 und 220) sicherstellen.

5. Vorrichtung nach Anspruch 1 und 2, **dadurch gekennzeichnet, dass** das flexible Verbindungsteil (210 und 220) eine Kette ist, mit deren Gliedern die Auflage (300) in Berührung kommt.

6. Vorrichtung nach Anspruch 1 und 2, **dadurch gekennzeichnet, dass** der untere Teil der Auflage (300) mit Gleitschuhen (330) ausgestattet ist, die den Kontakt zwischen der Auflage (300) und dem flexiblen Verbindungsteil (210 und 220) sicherstellen.

7. Vorrichtung nach Anspruch 1 und 2, **dadurch gekennzeichnet, dass** das Fahrgestell (120) mit einem Motor und mit einem Mittel zur Bewegungsübertragung ausgestattet ist, das die synchronisierte Ingangsetzung von zwei flexiblen Verbindungsteilen (210 und 220) sicherstellt.

8. Vorrichtung nach Anspruch 1 und 2, **dadurch gekennzeichnet, dass** das flexible Verbindungsteil (210 und 220) einer Bahn folgt, die vom Rand des Anhängers (100) zu seiner Mitte hin ansteigt, um der Auflage (300) sowohl eine waagerechte als auch eine senkrechte Translationsbewegung zu übertragen.

9. Vorrichtung nach Anspruch 1, **dadurch gekennzeichnet, dass** die symmetrische Struktur durch ein Paar Gliederketten (210 und 220) umgesetzt wird und deren Fortbewegungsbahn oder -weg ein Trapez bildet, das auf der Längssymmetrieebene zentriert ist und dessen nicht parallele Seiten die Rampen bilden.

10. Vorrichtung nach Anspruch 1, **dadurch gekennzeichnet, dass** die Auflage (300) mit vier Rädern ausgestattet ist, von denen zwei feststehend (321 und 322) und zwei lenkend (323 und 324) sind.
